# EUROPÄISCHE PATENTSCHRIFT

(11) **EP 3 258 702 B1**
(45) Veröffentlichungstag und Bekanntmachung des Hinweises auf die Patenterteilung: **02.01.2019**
(21) Anmeldenummer: 17000993.0
(22) Anmeldetag: 12.06.2017
(51) Int. Cl.: H04Q 1/02, H04Q 1/06

(54) **GESTELL FÜR BAUGRUPPENTRÄGER**
FRAME FOR MODULE HOLDER
SOCLE POUR SUPPORT DE MODULES

(30) Priorität: 15.06.2016 DE 102016007236
(43) Veröffentlichungstag der Anmeldung: 20.12.2017
(73) Patentinhaber: Langmatz GmbH, 82467 Garmisch-Partenkirchen (DE)
(72) Erfinder: Werner, Ertl, 82490 Farchant (DE); Fischer, Ludwig, 82487 Oberammergau (DE)
(74) Vertreter: Flosdorff, Jürgen

(56) Entgegenhaltungen:
- US-A1- 2001 002 657
- US-A1- 2012 126 069

## Beschreibung

Die Erfindung betrifft ein Gestell für Baugruppenträger, das einen lang gestreckten rechteckigen, vertikal angeordneten Rahmen aufweist, an dem am unteren Ende und am oberen Ende je ein U-förmiger Bügel mit seinen parallelen Stegen befestigt ist, wobei der obere und der untere Quersteg des Rahmens durch zwei parallele Befestigungsleisten verbunden sind, an denen die Baugruppenträger übereinander in dem Zwischenraum zwischen den U-förmigen Bügeln befestigt werden, wobei zwischen einer Befestigungsleiste und dem benachbarten Vertikalsteg des Rahmens, vorzugsweise an beiden Seiten, eine gelochte Platte befestigt ist, an der Kabel der Baugruppenträger z.B. mit Kabelbindern befestigt werden, und wobei auf dem unteren Bügel, auf dem das Gestell beispielsweise auf dem Boden steht, eine Kabelführungswanne befestigt ist. Das Dokument US2001/002657, publiziert am 07-06-2001, offenbart zusätzlich ein ähnliches Gestell für Baugruppenträger. In dem Baugruppenträger sind Patch-Spleiß- oder WDM-Baugruppen angeordnet, die zur Bearbeitung aus dem zugehörigen Baugruppenträger ausziehbar sind. Gestelle der oben beschriebenen Art sind bekannt und dienen der Befestigung von üblicherweise 12 bis 14 Baugruppenträger. Die Höhe des Gestells ist dadurch beschränkt, dass alle Baugruppenträger für Arbeiten an den Baugruppen bzw. Kassetten bequem erreichbar sein müssen.
Der vorliegenden Erfindung liegt die Aufgabe zugrunde, ein Gestell anzugeben, an dem mit einfachen Mitteln erheblich mehr Baugruppenträger befestigt werden können.

Diese Aufgabe wird erfindungsgemäß durch die Merkmale des Patentanspruchs 1 gelöst.

Vorteilhafte Ausgestaltungen der Erfindung sind in den Unteransprüchen gekennzeichnet.

Die Erfindung sieht vor, dass zwei weitere U-förmige Bügel und zwei weitere Befestigungsleisten an der Rückseite des Rahmens spiegelbildlich zu den Bügeln und Befestigungsleisten der Vorderseite befestigt sind, wobei außerdem auf dem weiteren unteren U-förmigen Bügel eine weitere Kabelführungswanne befestigt ist. Hierdurch ist das Gestell durch Hinzufügung von fünf Bauteilen, nämlich den zwei Bügeln, den zwei Befestigungsleisten und der zusätzlichen Kabelführungswanne beidseitig zur Befestigung von Baugruppenträgern nutzbar, ohne dass die übrigen Bauteile, nämlich der Rahmen und die bevorzugt an beiden Seiten angeordnete gelochte Platte zur Kabelbefestigung verdoppelt sind. Das erfindungsgemäße Gestell ist zur Aufnahme einer doppelten Anzahl von Baugruppenträgern geeignet, und zwar mit einem minimalen baulichen Aufwand und zu minimalen Kosten.

In weiterer Ausgestaltung der Erfindung ist vorgesehen, dass die zwei weiteren U-förmigen Bügel, die zwei weiteren Befestigungsleisten und die eine weitere Kabelführungswanne identisch mit den entsprechenden Bauteilen der anderen Seite des Gestells sind.

Die weiteren Bügel und Befestigungsleisten sind vorteilhafterweise über Distanzstücke an dem Rahmen festgeschraubt.

Nach einem weiteren Gesichtspunkt der Erfindung haben die Befestigungsleisten nur an den Höhenpositionen Gewindebohrungen, an denen die übereinander angeordneten, anzuschraubenden Baugruppenträger seitlich überstehende Befestigungslaschen haben. Damit ist sicher gestellt, dass die Baugruppenträger platzsparend an den Befestigungsleisten angebracht werden.

Der Rahmen und die Bügel sind bevorzugt aus denselben Kunststoff- oder Metallprofilen hergestellt.

Es ist bevorzugt, dass die sich zwischen den U-förmigen Bügeln erstreckende Platte beidseitig vorgesehen ist, jedoch kommt auch eine Ausführungsform mit nur einer gelochten Befestigungsplatte in Betracht.

Weitere Einzelheiten der Erfindung ergeben sich aus der nachfolgenden Beschreibung einer bevorzugten Ausführungsform eines Gestells für Baugruppenträger, die in den Figuren nicht dargestellt sind. Dabei zeigen:
- Figur 1: ein herkömmliches Gestell;
- Figur 2: das herkömmliche Gestell der Figur 1 sowie fünf Bauteile, mit denen das herkömmliche Gestell erweitert wird;
- Figur 3: das erfindungsgemäße beidseitig bestückbare Gestell.

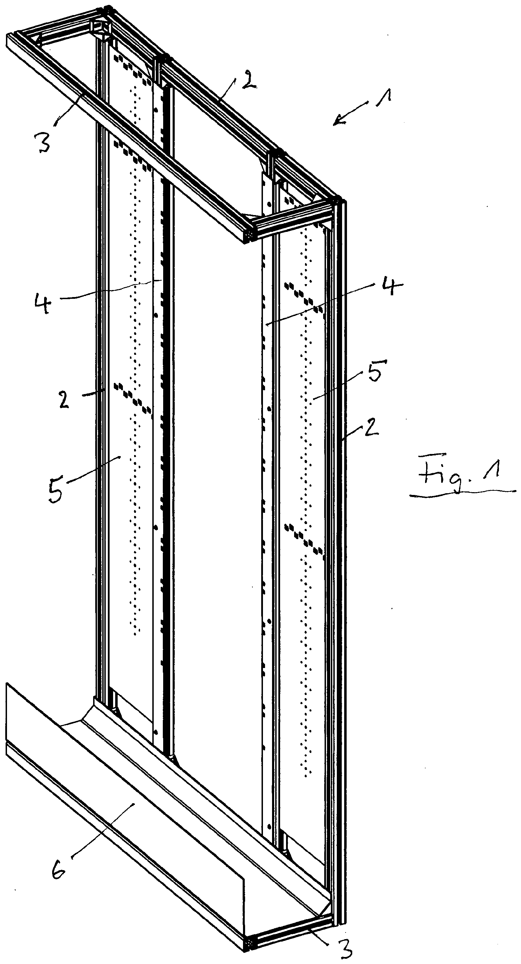

Das in Figur 1 dargestellte Gestell 1 enthält einen beim Gebrauch vertikalen rechteckigen Rahmen 2, an dessen unteren und oberen Ende jeweils ein U-förmiger Bügel 3 mit seinen kurzen Stegen befestigt ist. Die beiden Bügel 3 stehen im rechten Winkel übereinander von dem Rahmen 2ab.

An dem oberen und dem unteren Quersteg des Rahmens 2 sind zwei Befestigungsleisten 4 befestigt, die parallel zueinander und zu den Längsstegen des Rahmens in denselben Abständen von diesen angeordnet sind. Die Befestigungsleisten 4 haben einen solchen Abstand voneinander, dass übereinander angeordnete Baugruppenträger mit seitlich vorstehenden Befestigungslaschen mit Hilfe von Schrauben an den Befestigungsleisten 4 angeschraubt werden können, wozu diese an mit den Befestigungslaschen übereinstimmenden Stellen mit Käfigmuttern ausgestattet sind.

Zwischen den Befestigungsleisten 4 und den Längsstegen des Rahmens 2 ist jeweils eine gelochte Platte 5 befestigt, die sich nahezu bis zu den beiden Bügeln 3 erstreckt. An diesen gelochten Platten 5 werden Kabel der Baugruppenträger befestigt, die zu einer Kabelführungswanne 6 herab geführt werden, die auf dem unteren U-förmigen Bügel 3 befestigt ist.

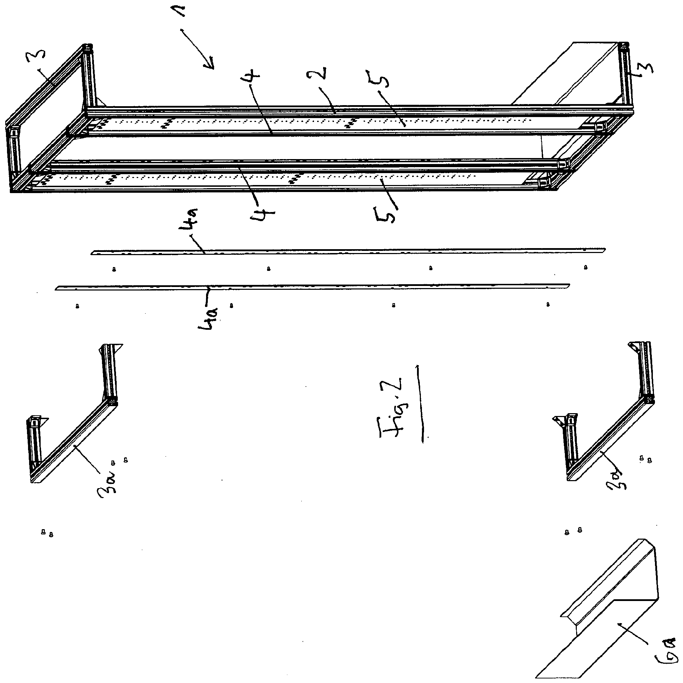

Figur 2 zeigt einen Bausatz aus zwei U-förmigen Bügeln 3a, zwei Befestigungsleisten 4a und einer Kabelführungswanne 6a, die mit den entsprechenden Bauteilen der in Figur 2 rechten Seite des Gestells übereinstimmen und spiegelbildlich an dem Rahmen befestigt werden, wobei die Kabelführungswanne 6a entsprechend auf dem unteren Bügel 3a befestigt wird. Die Bauteile werden angeschraubt, wozu an den kurzen Stegen der U-förmigen Bügel 3a Winkelstücke vorgesehen sind, wie dies auch an der anderen Seite des Gestells 1 der Fall ist.

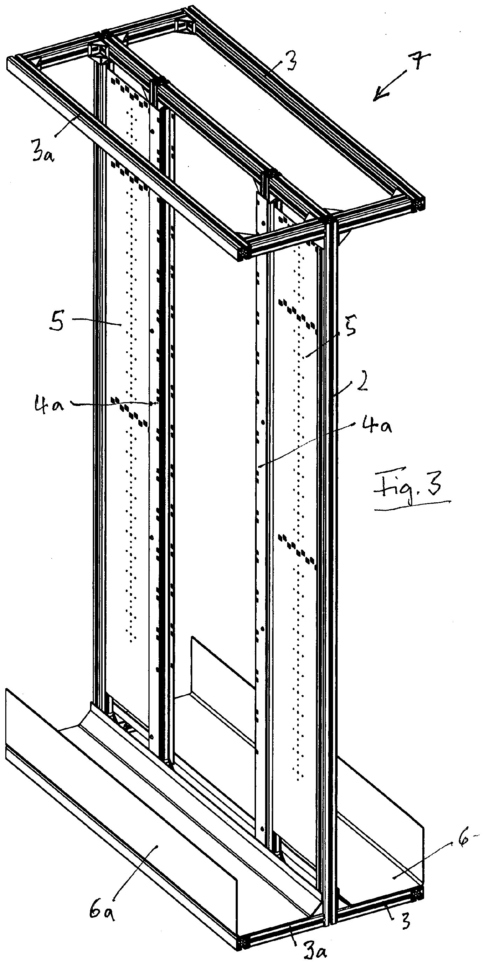

Figur 3 zeigt das erfindungsgemäße Gestell 7, an dem an beiden Seiten Baugruppenträger auf identische Weise befestigt werden können. Dabei werden die gelochten Platten 5 von beiden Seiten zur Befestigung von Kabeln benutzt.

Es wird betont, dass die Erfindung nicht auf die beschriebenen und dargestellten Ausführungsformen beschränkt ist, Vielmehr sind alle offenbarten Merkmale auf jede sinnvolle Weise einzeln miteinander kombinierbar.

## Patentansprüche

1. Gestell für Baugruppenträger, das einen lang gestreckten rechteckigen Rahmen (2) aufweist, an dem am unteren Ende und am oberen Ende je ein U-förmiger Bügel (3) mit seinen parallelen Stegen befestigt ist, wobei der obere und der untere Quersteg des Rahmens (2) durch zwei Befestigungsleisten (4) verbunden sind, an denen die Baugruppenträger übereinander zwischen den U-förmigen Bügeln (3) zu befestigen sind, wobei zwischen einer Befestigungsleiste (4) und dem zugehörigen Vertikalsteg des Rahmens vorzugsweise an beiden Seiten eine gelochte Platte (5) befestigt ist, an der Kabel der Baugruppenträger oder Zuführungsschläuche zu befestigen sind, und wobei eine Kabelführungswanne (6) auf dem unteren Bügel (3) befestigt ist,
**dadurch gekennzeichnet,**
**dass** zwei weitere U-förmige Bügel (3a) und zwei weitere Befestigungsleisten (4a) an der Rückseite des Rahmens (2) spiegelbildlich zu den U-förmigen Bügeln (3) und den Befestigungsleisten (4) der Vorderseite befestigt sind, wobei auf dem weiteren unteren U-förmigen Bügel (3a) eine weitere Kabelführungswanne (6a) befestigt ist.

2. Gestell nach Anspruch 1,
**dadurch gekennzeichnet,**
**dass** die weiteren U-förmigen Bügel (3a), die weiteren Befestigungsleisten (4a) und die weitere Kabelführungswanne (6a) identisch mit den entsprechenden Bauteilen (3, 4, 6) der Vorderseite des Gestells (7) sind.

3. Gestell nach Anspruch 1 oder 2,
**dadurch gekennzeichnet,**
**dass** die weiteren U-förmigen Bügel (3a) und die weiteren Befestigungsleisten (4a) an dem Rahmen (2) festgeschraubt sind.

4. Gestell nach einem der Ansprüche 1 bis 3,
**dadurch gekennzeichnet,**
**dass** der Rahmen (2) und die Bügel (3, 3a) dasselbe Querschnittssprofil haben.

5. Gestell nach einem der Ansprüche 1 bis 4,
**dadurch gekennzeichnet,**
**dass** die Befestigungsleisten (4, 4a) an den Höhenpositionen Durchbrüche zum Befestigen von Käfigmuttern haben, an denen übereinander angeordnete Baugruppenträger seitlich überstehende Befestigungslaschen haben.

## Claims

1. A frame for module carriers, which includes an elongate, rectangular frame (2), connected to which at the lower end and at the upper end with its parallel bars is a respective U-shaped bracket (3), wherein the upper and the lower transverse bars of the frame (2) are connected by two fastening rails (4), to which the module carriers are to be connected above one another between the U-shaped brackets (3), wherein fastened between one fastening rail (4) and the associated vertical bar of the frame, preferably on both sides, there is an apertured plate (5), to which cables of the module carriers or supply hoses are to be fastened and wherein a cable guiding tray (6) is fastened on the lower bracket (3), **characterised in that** two further U-shaped brackets (3a) and two further fastening rails (4a) are fastened to the rear side of the frame (2) mirror symmetrically to the U-shaped brackets (3) and the fastening rails (4) on the front side, wherein fastened to the further, lower U-shaped bracket (3a) there is a further cable guiding tray (6a).

2. A frame as claimed in Claim 1, **characterised in that** the further U-shaped brackets (3a), the further fastening bars (4a) and the further cable guiding tray (6a) are identical to the corresponding components (3, 4, 6) on the front side of the frame (7).

3. A frame as claimed in Claim 1 or 2, **characterised in that** the further U-shaped brackets (3a) and the further fastening bars (4a) are firmly screwed to the frame (2).

4. A frame as claimed in one of Claims 1 to 3, **characterised in that** the frame (2) and the brackets (3, 3a) have the same cross-sectional profile.

5. A frame as claimed in one of Claims 1 to 4, **characterised in that** the fastening rails (4, 4a) have openings for fastening cage nuts at the height positions at which module carriers arranged above one another have laterally projecting fastening lugs.

## Revendications

1. Châssis pour support de modules, qui présente un cadre (2) rectangulaire étiré en longueur, au niveau duquel respectivement un étrier (3) en forme de U est fixé par ses entretoises parallèles au niveau de l'extrémité inférieure et au niveau de l'extrémité supérieure, dans lequel les entretoises transversales supérieure et inférieure du cadre (2) sont reliées par deux baguettes de fixation (4), au niveau desquelles les supports de modules sont à fixer les uns aux dessus des autres entre les étriers (3) en forme de U, dans lequel est fixée entre une baguette de fixation (4) et l'entretoise verticale associée du cadre, de préférence au niveau des deux côtés, une plaque (5) perforée, au niveau de laquelle des câbles des supports de modules ou des tuyaux flexibles d'alimentation sont à fixer, et dans lequel une cuve de guidage de câble (6) est fixée sur l'étier inférieur (3),
**caractérisé en ce**
**que** deux autres étriers (3a) en forme de U et deux autres baguettes de fixation (4a) sont fixés au niveau du côté arrière du cadre (2) en symétrie de miroir par apport aux étriers (3) en forme de U et aux baguettes de fixation (4) du côté avant, dans lequel une autre cuve de guidage de câble (6a) est fixée sur l'autre étrier (3a) inférieur en forme de U.

2. Châssis selon la revendication 1,
**caractérisé en ce**
**que** les autres étriers (3a) en forme de U, les autres baguettes de fixation (4a) et l'autre cuve de guidage de câble (6a) sont identiques aux composants (3, 4, 6) correspondants du côté avant du châssis (7).

3. Châssis selon la revendication 1 ou 2,
**caractérisé en ce**
**que** les autres étiers (3a) en forme de U et les autres baguettes de fixation (4a) sont vissés fixement au niveau du cadre (2).

4. Châssis selon l'une quelconque des revendications 1 à 3,
**caractérisé en ce**
**que** le cadre (2) et les étriers (3, 3a) ont le même profil de section transversale.

5. Châssis selon l'une quelconque des revendications 1 à 4,
**caractérisé en ce**
**que** les baguettes de fixation (4, 4a) ont, au niveau des positions en hauteur, des passages servant à fixer des écrous cages, au niveau desquels des supports de modules disposés les uns au-dessus des autres ont des brides de fixation dépassant latéralement.
